# EUROPEAN PATENT APPLICATION

(11) **EP 4 765 042 A1**
(43) Date of publication of application: **24.06.2026**
(21) Application number: 25207845.6
(22) Date of filing: 09.10.2025
(51) Int. Cl.: G06V 10/82, G06V 40/19, G06V 40/18

(54) **EYE STATE DETECTION DEVICE AND OPERATING METHOD THEREOF**

(30) Priority: 17.12.2024 TW 113149121
(71) Applicant: Pegatron Corporation, Taipei City 112 (TW)
(72) Inventor: LIN, Tzu-Hao, 112 Taipei City (TW)
(74) Representative: Haseltine Lake Kempner LLP

(57) **Abstract**

Provided are an eye state detection device (100) and an operating method of the eye state detection device (100). The eye state detection device (100) includes an image capturing component (110). The operating method includes: capturing a facial image (FIMG) in a current frame by the image capturing element; obtaining a current eye image (EIMG(0)) with an eye region from the facial image (FIMG); obtaining at least one current eye image (EIMG(-1), EIMG(-2)) with an eye region of at least one prior frame; performing a weight function on the current eye image (EIMG(0)) and the at least one current eye image (EIMG(-1), EIMG(-2)) to generate a processed image (EIMG'); and determining a state of an eye in the eye region according to the processed image (EIMG').

## Description

### BACKGROUND

### Technology Field

The disclosure relates to a detection device and an operating method of the detection device, and particularly relates to an eye state detection device and an operating method of the eye state detection device.

### Related Art

Current eye state detection technology is gradually becoming widespread. Users may utilize eye state or viewing angle to interact with devices. Eye state may also be used to determine the mental state of the user. Therefore, how to provide precise eye state detection technology is one of the research focuses of persons skilled in the art.

### SUMMARY

The disclosure provides an eye state detection device and an operating method of the eye state detection device, providing a precise eye state detection result.

**In** an embodiment of the disclosure, the operating method is used for an eye state detection device. The eye state detection device includes an image capturing component. The eye state detection device executes commands of the operating method. The operating method includes: capturing, by the image capturing component, a facial image in a current frame; obtaining a current eye image with an eye region from the facial image; obtaining at least one prior eye image with an eye region of at least one prior frame; performing a weight function on the current eye image and the at least one prior eye image to generate a processed image; and determining a state of an eye in the eye region according to the processed image

**In** an embodiment of the disclosure, the eye state detection device includes an image capturing component and a determination circuit. The image capturing component captures a facial image in a current frame. The determination circuit is coupled to the image capturing component. The determination circuit obtains a current eye image with an eye region from the facial image, and obtains at least one prior eye image with an eye region of at least one prior frame. The determination circuit performs a weight function on the current eye image and the at least one prior eye image to generate a processed image. The determination circuit determines a state of an eye in the eye region according to the processed image.

Based on the above, the eye state detection device obtains a current eye image including an eye region from a facial image and obtains a prior eye image and performs weighting operation on the current eye image and the prior eye image to generate a processed image. The eye state detection device determines a state of an eye in the eye region according to the processed image. The processed image may clearly show details of the eye and movement of the eyeball. In this way, the eye state detection device is able to provide a precise eye state detection result.

### BRIEF DESCRIPTION OF THE DRAWINGS

FIG. 1 is a schematic diagram of an eye state detection device according to an embodiment of the disclosure.
FIG. 2 is a flowchart of an operating method according to an embodiment of the disclosure.
FIG. 3 is a schematic diagram of an eye state detection device according to an embodiment of the disclosure.
FIG. 4 is a flowchart of an operating method according to an embodiment of the disclosure.
FIG. 5 is a schematic diagram of a facial image according to an embodiment of the disclosure.
FIG. 6 is a schematic diagram of a current eye image according to an embodiment of the disclosure.
FIG. 7 is a flowchart of an operating method according to an embodiment of the disclosure.

### DESCRIPTION OF THE EMBODIMENTS

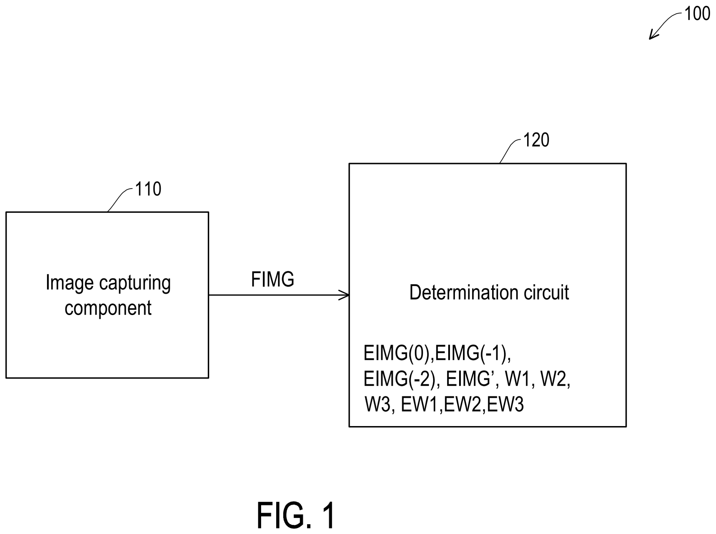

Please refer to FIG. 1, which is a schematic diagram of an eye state detection device according to an embodiment of the disclosure. In the present embodiment, an eye state detection device 100 includes an image capturing component 110 and a determination circuit 120. The image capturing component 110 captures a facial image FIMG in a current frame. The determination circuit 120 is coupled to the image capturing component 110. The determination circuit 120 receives the facial image FIMG. The determination circuit 120 obtains from the facial image FIMG a current eye image EIMG(0) with an eye region from the facial image FIMG, and obtains prior eye images EIMG(-1), EIMG(-2) with an eye regions of at least one prior frame.

In the present embodiment, the prior eye image EIMG(-1) corresponds to the facial image in a prior frame to the current frame. The prior eye image EIMG(-2) corresponds to the facial image in a further prior frame to the current frame.

In the present embodiment, the determination circuit 120 performs weight function on the current eye image EIMG(0) and the prior eye images EIMG(-1), EIMG(-2) to generate a processed image EIMG'. The determination circuit 120 determines the state of the eye in the eye region according to the processed image EIMG'.

It is worth mentioning here that the determination circuit 120 performs weigh function on the current eye image EIMG(0) and the prior eye images EIMG(-1), EIMG(-2) to generate the processed image EIMG', and determines the state of the eye in the eye region according to the processed image EIMG'. The processed image EIMG' may clearly show details of the eye and movements of the eyeball. In this way, the determination circuit 120 is able to provide a precise eye state detection result.

In the present embodiment, the determination circuit 120 may apply multiple weights to the current eye image EIMG(0) and the prior eye images EIMG(-1), EIMG(-2) to generate the processed image EIMG'. For example, the determination circuit 120 may provide weights W1, W2, W3, but the disclosure is not limited thereto. The determination circuit 120 multiplies the current eye image EIMG(0) by the weight W1 to generate a weighted image EW1. The determination circuit 120 multiplies the prior eye image EIMG(-1) by the weight W2 to generate a weighted image EW2. The determination circuit 120 multiplies the prior eye image EIMG(-2) by the weight W3 to generate a weighted image EW3. Next, the determination circuit 120 superimposes the weighted images EW1, EW2, EW3 to generate the processed image EIMG'.

Furthermore, the weights W1, W2, W3 may be adjusted by the significance of the current eye image EIMG(0) and the prior eye images EIMG(-1), EIMG(-2). For example, the current eye image EIMG(0) is more significant than the prior eye images EIMG(-1), EIMG(-2). Therefore, the weight W1 is higher than the weight W2 and the weight W3. For example, the current eye image EIMG(0) is more significant than the prior eye image EIMG(-1). The prior eye image EIMG(-1) is more significant than the prior eye image EIMG(-2). Therefore, the weight W1 is higher than the weight W2, and the weight W2 is higher than the weight W3. For example, the weight W1 is exemplified as "0.8"; the weight W2 is exemplified as "0.5"; the weight W3 is exemplified as "0.3". The disclosure is not limited by the values of the weights W1, W2, W3.

Furthermore, the determination circuit 120 may use an analysis model to estimate the eye state from the processed image EIMG'. For example, the eye state may include gaze, gaze angle, or eye closure. The analysis model may be exemplified as a Convolutional Neural Network (CNN) model or other models.

In some embodiments, the determination circuit 120 merely performs a weight function on the current eye image EIMG(0) and the prior eye image EIMG(-1) to generate the processed image EIMG'. In other words, the determination circuit 120 of the disclosure performs the weight function on the current eye image EIMG(0) and one or more prior eye images to generate the processed image EIMG'.

In the present embodiment, the image capturing component 110 is implemented by a dynamic vision sensor (DVS) in any form or configuration. The facial image FIMG is a dynamic vision image. Therefore, the facial image FIMG, the current eye image EIMG(0), and the prior eye images EIMG(-1), EIMG(-2) are images generated by changes in local pixel brightness. Compared to general images, the facial image FIMG, the current eye image EIMG(0), and the prior eye images EIMG(-1), EIMG(-2) have a smaller data size. Therefore, the determination circuit 120 has faster image processing speed.

Furthermore, the determination circuit 120 performs the weight function on the current eye image EIMG(0) and the prior eye images EIMG(-1), EIMG(-2) to generate the processed image EIMG'. Therefore, the processed image EIMG' shows brightness changes in multiple images of adjacent frames. Therefore, the processed image EIMG' has more notable contour features. Other features (such as skin color, face wrinkles) of the processed image EIMG' are unclear. The determination circuit 120 analyzes the contour features of the processed image EIMG'. Therefore, the privacy of the user may be protected.

In the present embodiment, the determination circuit 120 is exemplified as a Central Processing Unit (CPU), or other programmable general-purpose or special-purpose microprocessor, a Digital Signal Processor (DSP), a programmable controller, an Application Specific Integrated Circuits (ASIC), a Programmable Logic Device (PLD), or other similar devices or combinations of these devices.

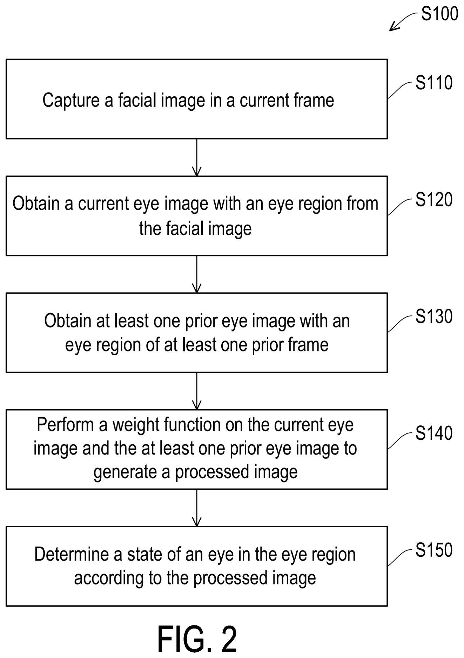

Please refer to FIG. 1 and FIG. 2, and FIG. 2 is a flowchart of an operating method according to an embodiment of the disclosure. In the present embodiment, an operating method S100 may be applied to the eye state detection device 100. The eye state detection device 100 may execute commands of the operating method S100. The operating method S100 includes Steps S110 to S150. In Step S110, the image capturing component 110 captures the facial image FIMG in the current frame. In Step S120, the determination circuit 120 obtains the current eye image EIMG(0) with the eye region from the facial image FIMG. In Step S130, the determination circuit 120 obtains the prior eye images EIMG(-1), EIMG(-2) with the eye region of at least one prior frame. In Step S140, the determination circuit 120 performs the weight function on the current eye image EIMG(0) and the prior eye images EIMG(-1), EIMG(-2) to generate the processed image EIMG'. In Step S150, the determination circuit 120 determines the state of the eye in the eye region according to the processed image EIMG'. The determination circuit 120 may clearly determine details of the eye and movement of the eyeball according to the processed image EIMG'.

The implementation details of Steps S110 to S150 have been clearly described in the embodiment of FIG. 1, so details are not repeated here.

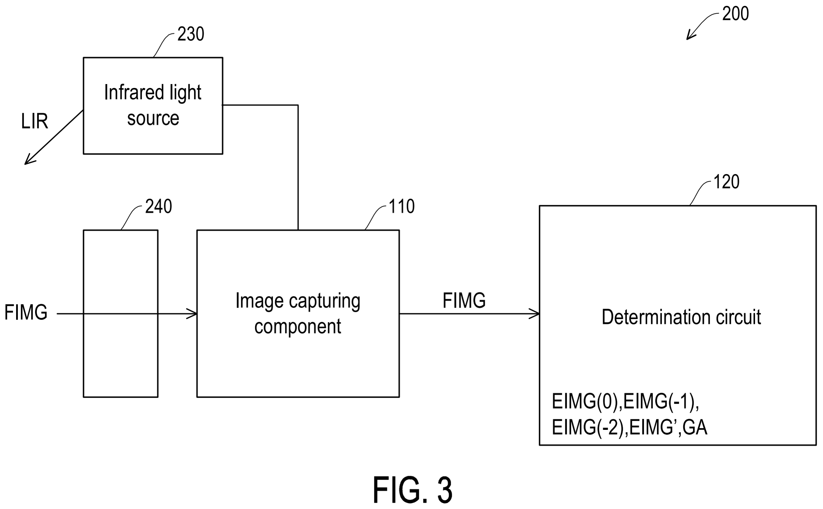

Please refer to FIG. 3, which is a schematic diagram of an eye state detection device according to an embodiment of the disclosure. In the present embodiment, an eye state detection device 200 includes an image capturing component 110, a determination circuit 120, an infrared light source 230, and a filter component 240. The infrared light source 230 is coupled to the image capturing component 110. The image capturing component 110 may control the infrared light source 230 to provide infrared light LIR. In some embodiments, the determination circuit 120 may control the infrared light source 230 to provide infrared light LIR. The operations of the image capturing component 110 and the determination circuit 120 have been clearly described in the embodiment of FIG. 1, so details are not repeated here.

In the present embodiment, the image capturing component 110 is implemented by DVS. The infrared light source 230 provides the infrared light LIR. The filter component 240 filters out other light than the infrared light LIR. Therefore, the facial image FIMG captured by the image capturing component 110 through the filter component 240 is an infrared light image. Also therefore, the current eye image EIMG(0) and the prior eye images EIMG(-1), EIMG(-2) are also infrared light images.

Generally speaking, current eye state detection methods are based on visible light images to detect the state of eyes. However, current eye state detection methods are affected by changes in environmental light, differences in pupil colors of users, and glasses worn by users (such as glasses with different lens colors or reflections from lenses), which makes it difficult to determine the eye state. When current eye state detection methods are applied to detect the eye state of drivers, the interference from changes in environmental light, differences in pupil colors of users, and glasses worn by users becomes more significant.

It is worth mentioning here that the eye state detection device 200 utilizes infrared light images to assist in detecting the eye state. Infrared light may penetrate through the lenses of glasses and exclude interference from environmental light and pupil color. That is to say, the eye state detection device 200 is able to provide a precise eye state detection result without being affected by lenses, environmental light, and pupil color. In addition, the determination circuit 120 performs the weight function on the current eye image EIMG(0) and the prior eye images EIMG(-1), EIMG(-2) to generate the processed image EIMG'.

It should be understood that the operating method S100 shown in FIG. 2 may be applied to the eye state detection device 200.

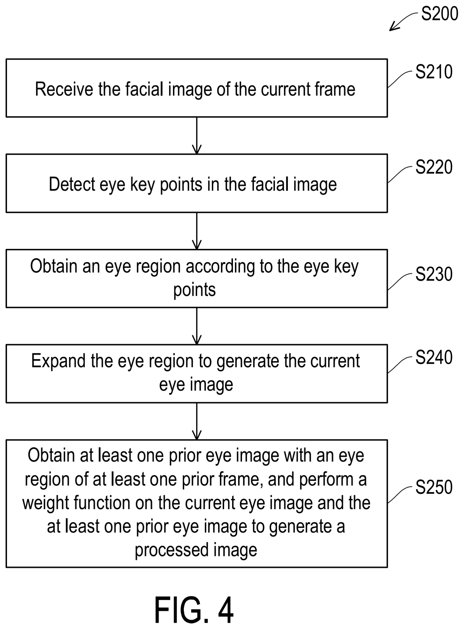

Please refer to FIG. 3 and FIG. 4, and FIG. 4 is a flowchart of an operating method according to an embodiment of the disclosure. In the present embodiment, the operating method S200 may be applied to the eye state detection device 200. The eye state detection device 200 may execute commands of the operating method S200. The operating method S200 includes Steps S210 to S250. In Step S210, the determination circuit 120 receives the facial image FIMG of the current frame. In Step S220, the determination circuit 120 detects multiple eye key points in the facial image FIMG. In Step S230, the determination circuit 120 obtains the eye region according to the multiple eye key points. In Step S240, the determination circuit 120 expands the eye region to generate the current eye image EIMG(0).

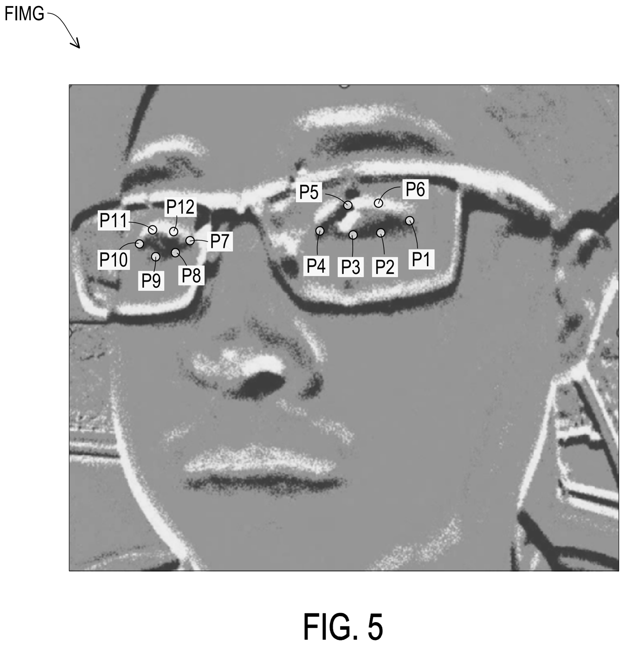

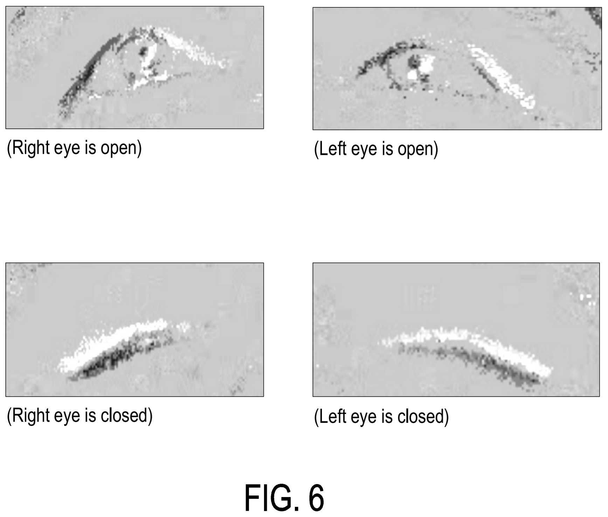

To further illustrate, please refer to FIG. 3, FIG. 4, FIG. 5, and FIG. 6, FIG. 5 is a schematic diagram of a facial image according to an embodiment of the disclosure, and FIG. 6 is a schematic diagram of a current eye image according to an embodiment of the disclosure. In the present embodiment, FIG. 5 shows the facial image FIMG captured by the image capturing component 110 in Step S210. In addition, the image capturing component 110 cooperates with the assistance of the infrared light source 230 and the filter component 240, so that the captured facial image FIMG is also an infrared light image. Infrared light may penetrate through the lenses of glasses and exclude interference from environmental light and pupil color. Therefore, the contour features of the eyes in the facial image FIMG are clearer.

In Step S220, the determination circuit 120 detects eye key points P01 to P12 in the facial image FIMG. For example, the determination circuit 120 may identify the eye key points P0 to P6 of the right eye and the eye key points P7 to P12 of the left eye from features of the facial image FIMG. In Step S230, the determination circuit 120 obtains the eye region from the facial image FIMG according to the eye key points P01 to P12.

In Step S240, the determination circuit 120 expands the eye region to generate the current eye image EIMG(0). In the present embodiment, an area of the current eye image EIMG(0) is slightly larger than an area of the eye region defined by the eye key points P01 to P12. In the present embodiment, the current eye image EIMG(0) may be an infrared eye image after filtering out the glasses frame image.

In Step S250, the determination circuit 120 obtains the prior eye images EIMG(-1), EIMG(-2) with the eye region of at least one prior frame, and performs the weight function on the current eye image EIMG(0) and the prior eye images EIMG(-1), EIMG(-2) to generate the processed image EIMG'. The operation of weight function in Step S250 is clearly described in the embodiment of FIG. 1, so details are not repeated here. In addition, the generation method of the prior eye images EIMG(-1), EIMG(-2) may be similar to the generation method of the current eye image EIMG(0).

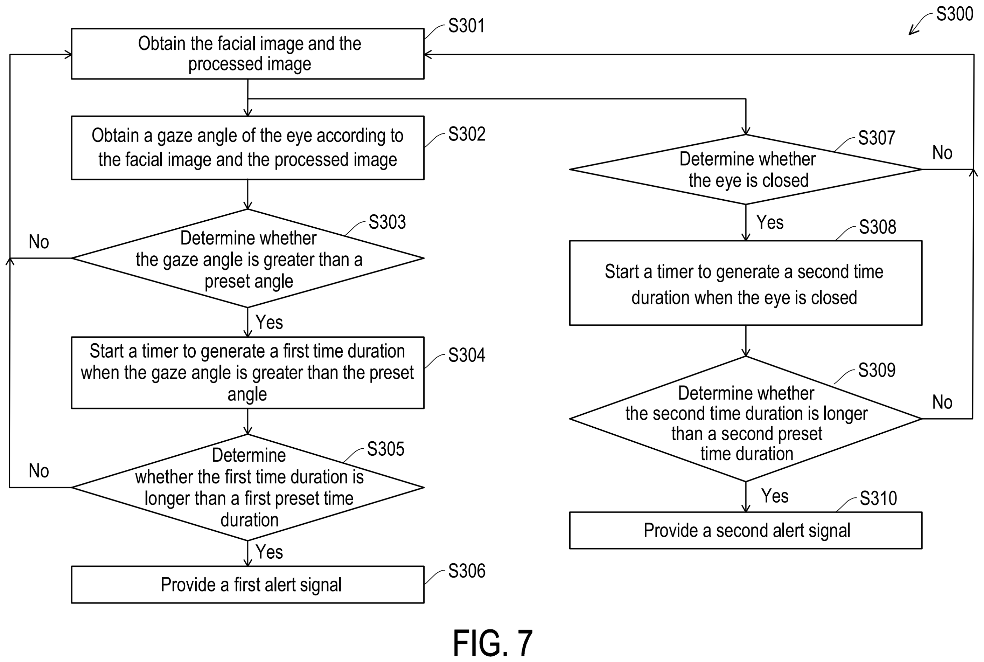

Please refer to FIG. 3 and FIG. 7, and FIG. 7 is a flowchart of an operating method according to an embodiment of the disclosure. In the present embodiment, an operating method S300 may be applied to the eye state detection device 200. The eye state detection device 200 may execute commands of the operating method S300. The operating method S300 includes Steps S301 to S310. In the present embodiment, the eye state detection device 200 may be performed to monitor the eye state of the user during driving. The eye state detection device 200 may be disposed in the steering wheel, rearview mirror, or dashboard to detect the eye state of the user during driving.

In Step S301, the determination circuit 120 obtains the facial image FIMG and the processed image EIMG'. Step S301 may be carried out by the operating method S200, for example. In Step S302, the determination circuit 120 obtains a gaze angle GA of the eye according to the facial image FIMG and the processed image EIMG'. The determination circuit 120 may determine the angle of the face and the pupil position of the user according to the facial image FIMG and the processed image EIMG' to estimate the gaze angle GA.

In Step S303, the determination circuit 120 determines whether the gaze angle GA is greater than a preset angle. When the gaze angle GA is less than or equal to the preset angle (such as 30°, but the disclosure is not limited thereto), this indicates that the user is looking forward. Therefore, the operating method S300 returns to Step S301 to obtain the facial image and the processed image corresponding to the next frame. When the gaze angle GA is greater than the preset angle, this indicates that the user is not looking forward. Therefore, the determination circuit 120 starts a timer to generate a first time duration when the gaze angle GA is greater than the preset angle in Step S304.

In Step S305, the determination circuit 120 determines whether the first time duration is longer than a first preset time duration (such as 3 seconds, but the disclosure is not limited thereto). When the first time duration is shorter than or equal to the first preset time duration, this indicates that the gaze angle GA of the user returns to within the preset angle within the first preset time duration. Therefore, the operating method S300 returns to Step S301 to obtain the facial image and the processed image corresponding to the next frame. When the first time duration is longer than the first preset time duration, the determination circuit 120 controls the eye state detection device 200 to provide a first alert signal in Step S306. The eye state detection device 200 may use the first alert signal to remind the user to look forward.

Furthermore, in Step 307, the determination circuit 120 determines whether the eye is closed according to the processed image EIMG'. When the determination circuit 120 determines that the eye is open (that is, "No"), the operating method S300 returns to Step S301 to obtain the facial image and the processed image corresponding to the next frame. When the determination circuit 120 determines that the eye is closed (that is, "Yes"), the determination circuit 120 starts a timer to generate a second time duration when the eye is closed in Step S308. In Step S309, the determination circuit 120 determines whether the second time duration is longer than a second preset time duration (such as 3 seconds, but the disclosure is not limited thereto). When the second time duration is shorter than or equal to the second preset time duration, this indicates that the user opens the eyes within the second preset time duration. Therefore, the operating method S300 returns to Step S301 to obtain the facial image and the processed image corresponding to the next frame. When the second time duration is longer than the second preset time duration, the determination circuit 120 controls the eye state detection device 200 to provide a second alert signal in Step S310. The eye state detection device 200 may use the second alert signal to remind the user to open the eyes.

In some embodiments, the eye state detection device 200 provides the first alert signal to a vehicle host. The vehicle host reminds the user to look forward according to the first alert signal. In some embodiments, the eye state detection device 200 provides the second alert signal to the vehicle host. The vehicle host reminds the user to open the eye according to the second alert signal.

In some embodiments, the operating method S300 may not include Steps S302 to S306. In some embodiments, the operating method S300 may not include Steps S307 to S310.

In summary, the eye state detection device performs a weight function on the current eye image and the prior eye image to generate a processed image and determines the state of the eye in the eye region according to the processed image. The processed image may clearly show details of the eye and movement of the eyeball. In this way, the determination circuit is able to provide a precise eye state detection result. In some embodiments, the image capturing component is implemented by DVS. Therefore, the facial image, the current eye image, and the prior eye images are images with changes in local pixel brightness and have a smaller data size. Therefore, the determination circuit has faster image processing speed. Other features (such as skin color, facial wrinkles) of the processed image are unclear. Therefore, the privacy of the user may be protected.

## Claims

1. An operating method of an eye state detection device (100), wherein the eye state detection device (100) comprises an image capturing component (110), the eye state detection device (100) performs the operating method, and the operating method comprises:
capturing, by the image capturing component (110), a facial image (FIMG) in a current frame;
obtaining a current eye image (EIMG(0)) with an eye region from the facial image (FIMG);
obtaining at least one current eye image (EIMG(-1), EIMG(-2)) with an eye region of at least one prior frame;
performing a weight function on the current eye image (EIMG(0)) and the at least one current eye image (EIMG(-1), EIMG(-2)) to generate a processed image (EIMG'); and
determining a state of an eye in the eye region according to the processed image (EIMG').

2. The operating method as claimed in claim 1, wherein the image capturing component (110) is a dynamic vision sensor and the facial image (FIMG) is a dynamic vision sensing image.

3. The operating method as claimed in claim 1 or 2, wherein the step of obtaining the current eye image (EIMG(0)) with the eye region from the facial image (FIMG) comprises:
detecting a plurality of eye key points (P01 to P12) in the facial image (FIMG) and obtaining the eye region according to the eye key points (P01 to P12); and
obtaining the current eye image (EIMG(0)) according to the eye region.

4. The operating method as claimed in claim 3, wherein the step of obtaining the current eye image (EIMG(0)) according to the eye region comprises:
expanding the eye region to generate the current eye image (EIMG(0)), wherein an area of the current eye image (EIMG(0)) is larger than an area of the eye region defined by the eye key points (P01 to P12).

5. The operating method as claimed in claim 1, 2 or 3, wherein the at least one current eye image (EIMG(-1), EIMG(-2)) comprises a first current eye image (EIMG(-1), EIMG(-2)) corresponding to a prior frame to the current frame and a second current eye image (EIMG(-1), EIMG(-2)) corresponding to a further prior frame to the current frame, and the step of performing weight function on the current eye image (EIMG(0)) and the at least one current eye image (EIMG(-1), EIMG(-2)) to generate the processed image (EIMG') comprises:
multiplying the current eye image (EIMG(0)) by a first weight (W1) to generate a first weighted image (EW1);
multiplying the first current eye image (EIMG(-1), EIMG(-2)) by a second weight (W2) to generate a second weighted image (EW2);
multiplying the second current eye image (EIMG(-1), EIMG(-2)) by a third weight (W3) to generate a third weighted image (EW3); and
superimposing the first weighted image (EW1), the second weighted image (EW2), and the third weighted image (EW3) to generate the processed image (EIMG').

6. The operating method as claimed in claim 5, wherein the first weight (W1) is greater than the second weight (W2) and the third weight (W3).

7. The operating method as claimed in claim 1, 2, 3 or 5, further comprising:
determining a gaze angle (GA) of the eye according to the facial image (FIMG) and the processed image (EIMG');
starting a timer when the gaze angle (GA) is greater than a preset angle to generate a first time duration; and
providing a first alert signal when a first time duration of the timer is longer than a first preset time duration.

8. The operating method as claimed in claim 1, 2, 3, 5 or 7, wherein the step of determining the state of the eye in the eye region according to the processed image (EIMG') comprises:
determining whether the eye is closed according to the processed image (EIMG');
starting a timer when the eye is closed; and
providing a second alert signal when the second time duration of the timer is longer than a second preset time duration.

9. The operating method as claimed in claim 8, wherein the eye state detection device (100) further comprises an infrared light source (230) and a filter component (240), and the operating method further comprises:
providing, by the infrared light source (230), infrared light (LIR); and
filtering out, by the filter component (240), other light than the infrared light (LIR),
wherein the facial image (FIMG), the current eye image (EIMG(0)), and the at least one current eye image (EIMG(-1), EIMG(-2)) are infrared light images.

10. An eye state detection device (100), comprising:
an image capturing component (110) configured to capture a facial image (FIMG) in a current frame; and
a determination circuit (120) coupled to the image capturing component (110) and configured to:
obtain a current eye image (EIMG(0)) with an eye region from the facial image (FIMG),
obtain at least one current eye image (EIMG(-1), EIMG(-2)) with an eye region of at least one prior frame,
perform a weight function on the current eye image (EIMG(0)) and the at least one current eye image (EIMG(-1), EIMG(-2)) to generate a processed image (EIMG'), and
determine a state of an eye in the eye region according to the processed image (EIMG').

11. The eye state detection device (100) as claimed in claim 10, wherein the image capturing component (110) is a dynamic vision sensor and the facial image (FIMG) is a dynamic vision sensing image.

12. The eye state detection device (100) as claimed in claim 10 or 11, wherein the determination circuit (120) detects a plurality of eye key points (P01 to P12) in the facial image (FIMG), obtains the eye region according to the eye key points (P01 to P12), and obtains the current eye image (EIMG(0)) according to the eye region.

13. The eye state detection device (100) as claimed in claim 12, wherein the determination circuit (120) expands the eye region to generate the current eye image (EIMG(0)), so that an area of the current eye image (EIMG(0)) is larger than an area of the eye region defined by the eye key points (P01 to P12).

14. The eye state detection device (100) as claimed in claim 10, 11 or 12, wherein
the at least one current eye image (EIMG(-1), EIMG(-2)) comprises a first current eye image (EIMG(-1), EIMG(-2)) corresponding to a prior frame to the current frame and a second current eye image (EIMG(-1), EIMG(-2)) corresponding to a further prior frame to the current frame, and
the determination circuit (120) multiplies the current eye image (EIMG(0)) by a first weight (W1) to generate a first weighted image (EW1), multiplies the first current eye image (EIMG(-1), EIMG(-2)) by a second weight (W2) to generate a second weighted image (EW2), multiplies the second current eye image (EIMG(-1), EIMG(-2)) by a third weight (W3) to generate a third weighted image (EW3), and superimposes the first weighted image (EW1), the second weighted image (EW2), and the third weighted image (EW3) to generate the processed image (EIMG').

15. The eye state detection device (100) as claimed in claim 14, wherein the first weight (W1) is greater than the second weight (W2) and the third weight (W3).

16. The eye state detection device (100) as claimed in claim 10, 11, 12 or 14, wherein
the determination circuit (120) determines a gaze angle (GA) of the eye according to the facial image (FIMG) and the processed image (EIMG'),
the determination circuit (120) starts a timer when the gaze angle (GA) is greater than a preset angle, and
the determination circuit (120) controls the eye state detection device (100) to provide a first alert signal when a first time duration of the timer is longer than a first preset time duration.

17. The eye state detection device (100) as claimed in claim 10, 11, 12, 14 or 16, wherein
the determination circuit (120) determines whether the eye is closed according to the processed image (EIMG'),
the determination circuit (120) starts a timer when the eye is closed, and
the determination circuit (120) controls the eye state detection device (100) to provide a second alert signal when a second time duration of the timer is longer than a second preset time duration.

18. The eye state detection device (100) as claimed in claim 10, 11, 12, 14, 16 or 17, wherein the eye state detection device (100) further comprises:
an infrared light source (230) configured to provide infrared light (LIR); and
a filter component (240) configured to filter out other light than the infrared light (LIR),
wherein the image capturing component (110) captures the facial image (FIMG) through the filter component (240), and
the facial image (FIMG), the current eye image (EIMG(0)), and the at least one current eye image (EIMG(-1), EIMG(-2)) are infrared light images.
